# FASCICULE DE BREVET EUROPEEN

(11) **EP 0 868 286 B1**
(45) Date de publication et mention de la délivrance du brevet: **29.09.2004**
(21) Numéro de dépôt: 96941090.1
(22) Date de dépôt: 29.11.1996
(51) Int. Cl.: B29C 51/14, B32B 27/12, B29C 51/28

(54) **PROCEDE POUR L'OBTENTION D'UN ARTICLE PERMEABLE NON PLAT PAR THERMOFORMAGE, ET ARTICLE TEL QU'OBTENU PAR LE PROCEDE**
VERFAHREN ZUR HERSTELLUNG EINES PERMEABLEN, NICHT FLÄCHIGEN GEGENSTANDES MITTELS THERMOFORMEN, UND DURCH DAS VERFAHREN HERSTELLBARER GEGENSTAND
PROCESS FOR MAKING A PERMEABLE, NON FLAT ARTICLE BY THERMOFORMING, AND ARTICLE AS OBTAINED BY THE PROCESS

(30) Priorité: 30.11.1995 FR 9514389
(43) Date de publication de la demande: 07.10.1998
(73) Titulaire: Form & Tiss, 43290 Montfaucon-en-Velay (FR)
(72) Inventeur: WEIL, François, René, F-10100 Romilly-s/Seine (FR); MARTIN, Claude, André, Raymond, F-10150 Sainte-Maure (FR)
(74) Mandataire: Thivillier, Patrick
(86) Numéro de dépôt international: PCT/FR1996/001907
(87) Numéro de publication internationale: WO 1997/019803

(56) Documents cités:
- EP-A- 0 568 812
- WO-A-87/07557
- DE-A- 1 635 404
- DE-A- 2 124 779
- DE-A- 2 706 446
- GB-A- 2 184 032
- US-A- 3 962 392
- US-A- 4 047 870
- US-A- 5 297 328

## Description

On connaît depuis longtemps des articles en différents matériaux, dont le bois et le métal, qui sont recouverts de tissus dont on exploite la souplesse pour leur faire épouser des formes non planes.

Cependant, un tissu conventionnel fait de fils inélastiques n'est pratiquement pas extensible mais il est flexible dans les deux directions de son plan, correspondant respectivement à la trame et à la chaîne. Il n'est donc possible de donner à un tissu qu'une forme relativement simple, c'est-à-dire développable, à moins d'accepter de le couper pour rapprocher les bords diversement formés pour reproduire une forme stable en trois dimensions.

Il existe cependant des cas où il serait intéressant de donner à une étoffe des formes relativement complexes, notamment dans le domaine de l'emballage, du conditionnement et de la présentation d'objets relativement luxueux, fragiles ou délicats.

Jusqu'à maintenant, on n'a trouvé que des solutions imparfaites car elles ne permettent que très peu de variantes.

On peut citer, par exemple, la solution qui consiste à thermoformer une feuille de matière synthétique puis à recouvrir la feuille ainsi formée avec une multitude de microfibres indépendantes (nommées «flocs») qui y sont fixées par une colle ou par le pouvoir adhésif de la matière synthétique ramollie.

Le fait que ces innombrables microfibres soient disposées en vrac interdit de recouvrir de façon techniquement simple la feuille de matière synthétique autrement que selon une teinte uniforme, les microfibres étant d'une ou plusieurs couleurs élémentaires, la teinte venant de l'impression d'optique globale, chaque microfibre étant absolument imperceptible en elle-même l'oeil nu.

En dehors des formes qui peuvent varier à l'infini, on n'obtient toujours qu'un seul aspect de surface puisque seule la couleur varie.

L'État de la Technique peut, en outre, être illustré par les documents de brevet suivants : de la revendication 1.
- UK 2 184 032 qui décrit un procédé pour l'obtention d'un article non plat, en l'occurrence une tête de poupée, présentant deux faces dont l'une est une nappe préalablement constituée en un matériau tissé, tandis que l'autre est une épaisse feuille de mousse synthétique, feuilles réunies d'abord par laminage et collage, puis mises en forme ensemble par moulage à chaud avec une troisième feuille en matériau tricoté.
- DE 1 635 404 qui décrit une machine pour la fabrication d'un article non plat, en l'occurrence des composants de vêtements, au moyen de la chaleur et comprenant un poste d'approvisionnement de produit à thermoformer, un poste de thermoformage, un poste de découpage et un poste de découpage, le poste de thermoformage comprenant une membrane déformable.
- DE 27 06 446 qui représente l'art antérieur le plus proche et qui décrit un procédé pour l'obtention d'un article on plat présentant deux faces extérieures, dont l'une est une nappe dite « textile » préalablement constituée en un matériau tissé ou non tissé, tandis que l'autre face est constituée d'une feuille perforée en matière synthétique thermoformable, les deux faces étant réunies par fusion de ladite feuille perforeé.

La présente invention se propose d'améliorer la fabrication d'articles perméables thermoformés non plat utilisant comme matériau une nappe textile préexistante, souple et extensible, naturellement ou artificiellement perméable : étoffe, tissu, tricot, non tissé ou complexe sur une base textile, que ce matériau soit uni, imprimé, « Jacquard », structuré, embelli, mince, épais, du genre dentelle ou autre.

A cette fin, l'invention a pour objet un procédé conforme aux caractéristiques

L'invention a également pour objet un ensemble de plusieurs feuilles selon les caractéristiques de la revendication 4.

L'invention a également pour objet un article perméable thermoformé non plat tel que défini dans le revendication 12.

L'invention sera mieux comprise par la description détaillée ci-après faite en référence au dessin annexé. Bien entendu, la description et le dessin ne sont donnés qu'à titre d'exemple indicatif et non limitatif.
La figure 1 est une vue schématique partielle d'un article conforme à l'invention, constitué par un complexe plat à trois composants.
La figure 2 est une vue schématique en perspective avec coupe partielle d'un article conforme à l'invention constitué par une barquette en volume.
Les figures 3 à 10 illustrent schématiquement les différentes étapes du procédé conforme à l'invention permettant d'obtenir un article en volume ayant une face en matière synthétique et une face en étoffe.
La figure 11 est une vue schématique en élévation représentant l'essentiel d'une machine permettant la mise en couvre du procédé conforme à l'invention.
Les figures 12 et 13 sont deux vues schématiques partielles en plan montrant deux positions significatives d'un élément de chauffage faisant partie de ladite machine.

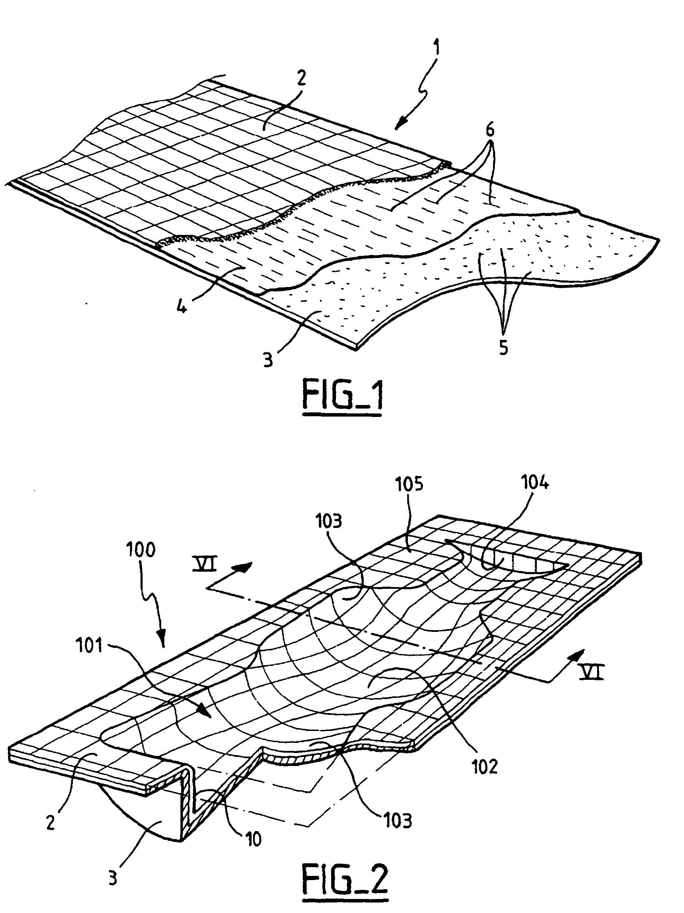

En se reportant aux figures 1 et 2, on voit un article conforme à l'invention, respectivement avant et après formage.

Sur la figure 1, l'article se présente à plat, sous la forme d'un complexe 1 ayant :
- une face extérieure 2 constituée par une étoffe obtenue par tricotage afin qu'elle soit extensible dans les deux directions du plan du fait qu'elle est formée de mailles et non de fils croisés en chaîne et en trame,
- une face extérieure 3 constituée par une feuille en matière synthétique de type thermoformable.

L'étoffe 2 et la feuille 3 doivent être perméables, c'est-à-dire susceptibles d'être facilement traversées par l'air sous faible pression pour des raisons qui seront exposées plus loin.

Entre l'étoffe 2 et la feuille 3, se trouve une feuille de colle 4 également perméable, destinée à réunir énergiquement l'étoffe 2 et la feuille 3.

L'étoffe 2 peut être naturellement perméable à l'air, du fait de sa structure à mailles, surtout si la serre (c'est-à-dire la grandeur de la maille) est lâche.

On peut préciser tout de suite que l'invention permet d'utiliser aussi des étoffes qui ne seraient pas en soi perméables facilement par de l'air, à condition que leur structure présente des passages soit naturels, soit spécialement créés. A titre d'exemple, une dentelle est considérée comme une structure naturellement perméable, même si le tissu proprement dit ne l'est pas.

La nappe 2 peut être extensible naturellement et en permanence, comme c'est le cas d'une étoffe à mailles.

Elle peut aussi n'être extensible qu'à certaines conditions, dès lors que celles-ci sont remplies au moment du thermoformage. Il peut s'agir, en particulier, d'un certains degré de température, auquel cas la nappe 2 peut être considérée comme thermoformable, comme la feuille 3.

Une telle nappe peut, par exemple, être en cuir ou imitation du cuir, en un matériau non tissé, dès lors qu'elle est perméable naturellement ou artificiellement, et qu'elle est extensible dans les deux directions du plan au moins lors du thermoformage.

La feuille 3 est du type couramment disponible dans le commerce et est donc naturellement imperméable. Dans ce cas, l'invention prévoit de la rendre perméable en y pratiquant de nombreux trous 5 de très petites dimensions. Ces microperforations ne changent pratiquement rien aux caractéristiques mécaniques de la feuille 3 et n'ont pour seul effet que de la rendre perméable à l'air, de sorte que si la feuille 3 est perméable par nature, il n'y a pas lieu de la perforer après fabrication.

La feuille de colle 4 doit aussi être perméable car l'on souhaite que l'article 1 tout entier soit perméable dans son ensemble puisque, pour des raisons exposées plus loin, il ne faut pas qu'un élément imperméable s'oppose ou contrarie le libre passage de l'air à travers l'article 1 lui-même.

Il existe dans le commerce de nombreuses variantes de feuilles de colle 4 plus ou moins continues et ce que l'on vient de dire à propos de la feuille 3 s'applique aussi à la feuille de colle 4 : si elle est traversée de passages (il existe des feuilles de colle en grille) elle peut facilement être traversée par de l'air sous faible pression alors que si elle est naturellement imperméable, il faut y créer volontairement des passages tels que des petites fentes 6.

Cependant, en ce qui concerne la feuille de colle 4, il faut préciser que l'on pourrait aussi utiliser de la colle en poudre pour l'appliquer directement soit sur l'étoffe 2, soit sur la feuille 3, soit sur les deux à la fcis. On pourrait aussi ne disposer cette colle qu'au moment de la mise en forme de l'article et, dans un cas comme dans l'autre, il faut prendre garde que la fusion (ou même le simple ramollissement) de la colle ne produise un film continu et imperméable.

Sur la figure 2, l'article 100 se présente en volume, sous la forme d'une barquette composée d'un alvéole central 101 formé d'un fond 102 et de parois arrondies 103 ou abruptes 104, et bordé d'un entourage plan, ou trottoir, 105.

Sur la figure 1 comme sur la figure 2, on a volontairement représenté l'étoffe 2 comme ayant des carreaux réguliers, afin de faciliter l'observation de la déformation de cette étoffe dans les deux directions de son plan d'origine. On voit, en effet, que l'étoffe 2 s'applique fidèlement sur toute la surface de la feuille 3, bien que le thermoformage de cette feuille 3 ait créé des courbes non développables.

Grâce à la colle intercalée entre l'étoffe 2 et la feuille 3, on obtient un ensemble unitaire présentant une face 2 en étoffe et une face 3 en matière synthétique. On comprend que, selon les applications, on peut adopter une feuille 3 transparente, translucide, opaque et de toute couleur assortie à celle(s) de l'étoffe 2.

En vue de l'obtention par thermoformage d'un article 100 du genre de celui *de la figure 2,* on peut soit créer d'abord le complexe de la figure 1 stocké en bobines ou en plaques prédécoupées, le cas échéant pour former des ébauches de formes et de dimensions coordonnées à celles de l'article thermoformé fini, soit créer le complexe 1 juste avant le thermoformage, auquel cas les trois composants étoffe. 2, feuille 3 et colle 4 sont stockés séparément sur trois bobines distinctes, l'une portant l'étoffe 2, la seconde la colle 4 et la troisième la feuille 3.

Ces trois composants sont alors superposés avant d'entrer dans un moule de thermoformage.

Pour une bonne stabilité des trois composants du complexe, il est avantageux de les réunir selon l'intégralité de leur surface ou seulement selon des zones. Dans ce cas, il est bon de prévoir ces zones hors de l'endroit qui sera ultérieurement thermoformé car pour cette opération, les trois composants doivent pouvoir se mettre en forme librement, sans être bridés.

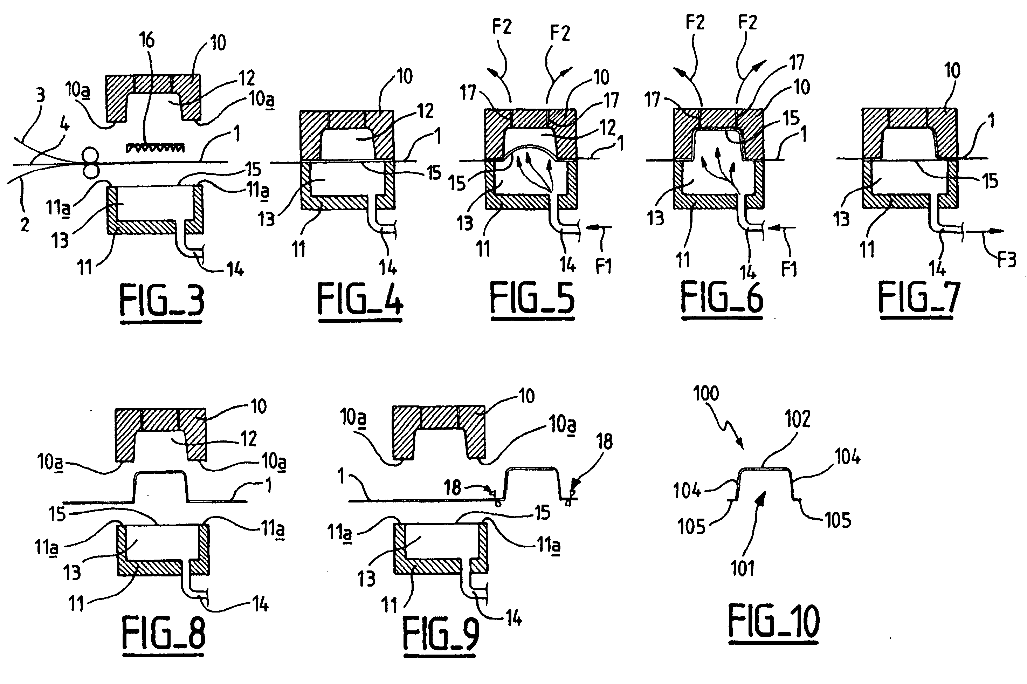

Les figures 3 à 10, illustrent le procédé conforme à l'invention permettant d'obtenir un article en volume, à partir des composants plats d'origine : étoffe 2, feuille 3 et colle 4.

Ainsi que cela est connu en soi, le thermoformage nécessite un moule en deux parties, 10 et 11, dont l'une au moins présente une matrice présentant les formes voulues. Ici, la matrice 12 est prévue sur la partie supérieure 10 du moule et offre une forme simple, en U, qui pourrait être celle considérée en coupe selon la ligne VI - VI de la figure 2.

On observe que l'on amène le complexe 1 entre les deux parties 10 et 11 du moule en le présentant de telle manière que l'étoffe 2 se trouve en regard de la partie inférieure 11 du moule, tandis que la feuille 3 est en regard de la matrice 12 de la partie supérieure 10.

La partie 11 présente la forme d'une chambre 13 dans le fond de laquelle aboutit un conduit 14 relié à une source de fluide sous pression (non représentée), notamment de l'air comprimé.

La chambre 13 est hermétiquement fermée à sa partie supérieure par une membrane élastique imperméable 15 assujettie de manière étanche aux bords de ladite chambre 13.

Entre le complexe 1 et la matrice 12, se trouve un élément de chauffage 16 de tout type connu de l'Homme de Métier, permettant de ramollir la feuille 3 juste avant son thermoformage.

Il est clair que l'élément de chauffage 16, lorsqu'il est situé à l'aplomb du moule, doit être monté mobile pour pouvoir être amené soit dans sa position active de la figure 3 pour chauffer et ramollir la feuille 3, soit dans une position d'effacement, hors du contour du moule, c'est-à-dire en deçà ou au delà du plan de la feuille portant la figure 3.

Dans la pratique, on utilise des machines qui agissent en continu, de sorte que le complexe 1 est déplacé pas à pas devant différents postes que présente la machine, auquel cas l'élément de chauffage est placé en amont du moule et reste .immobile, seule son action de chauffage étant neutralisée ou amoindrie, par exemple au moyen d'un déflecteur mobile, ou en prévoyant des phases d'allumage et des phases d'extinction synchronisées avec le déplacement du complexe.

Le procédé d'obtention d'un article en volume conforme à l'invention est le suivant :

Les deux parties 10 et 11 du moule sont éloignées l'une de l'autre afin de pouvoir placer le complexe 1 au-dessus de la chambre 13 et de la membrane 15, tout en recouvrant largement les bords 11a de la partie 11.

Lorsque le complexe 1 est convenablement positionné, l'élément de chauffage 16 est mis en position active (figure 3) et est porté à la température voulue pour rendre malléable la feuille 3 et pour rendre active la colle 4.

On remarque que l'étoffe 2 et la membrane 15 sont protégés d'un chauffage excessif puisqu'ils sont situés du côté du complexe 1 opposé à celui qui fait face à l'élément 16.

Lorsque la température voulue est atteinte, notamment en tenant compte du temps d'arrêt en position active de l'élément 16, les deux parties 10 et 11 du moule sont rapprochées l'une de l'autre jusqu'à ce que le complexe 1 soit pincé et fortement maintenu par application les uns contre les autres des bords 10a de la partie 10 qui entourent la matrice 12 et des bords 11a de la partie 11 (figure 4).

A ce moment, on ouvre l'arrivée d'air comprimé dans la chambre 13 par le conduit 14, comme le symbolise la flèche F1 des figures 5 et 6.

La pression de l'air s'exerce directement sur la face interne de la membrane 15 et l'on détermine cette pression de telle manière qu'elle soit apte à dilater la membrane 15 qui pousse alors le complexe 1 vers la matrice 12 (figure 5), la membrane 15 étant en contact avec l'étoffe 2.

On maintient la pression d'air dans la chambre 13 jusqu'à ce que le complexe tout entier soit fortement pressé contre les parois de la matrice 12.

On comprend que la membrane 15 étant imperméable, elle pousse devant elle non seulement le complexe 1 mais également l'air qui se trouvait naturellement au-dessus de cette membrane 15 et qui a été enfermé dans l'espace compris entre ladite membrane 15 et la matrice 12, en particulier entre la membrane 15 et la feuille 3.

Pour que l'étoffe 2 soit parfaitement appliquée contre la feuille 3 quelles que soient les formes de la matrice 12, et qu'en outre elle soit parfaitement collée en permanence à ladite feuille 3 afin que l'article terminé, en volume, soit de qualité irréprochable, il faut éviter toute formation aléatoire de poches d'air aussi bien entre le complexe 1 et la matrice 12 qu'entre l'étoffe 2 et la feuille 3.

Il faut donc que l'air poussé par la membrane imperméable 15 puisse s'échapper et, pour cela, il doit pouvoir traverser l'étoffe 2, la colle 4 et la feuille 3.

Cet air se trouve alors dans la matrice 12 où sa présence est extrêmement défavorable à un formage correct, puisque s'il y restait pendant le durcissement de la feuille 3, il créerait des poches entre la feuille 3 et la matrice 12 d'où il résulterait des creux extérieurs sur la face en matière synthétique de l'article en volume.

On évacue l'air qui se trouve dans la matrice 12 grâce à des évents 17 qui traversent la partie supérieure 11 du moule et qui débouchent à l'atmosphère selon les flèches F2 des figures 5 et 6.

Il ne faut pas créer une dépression dans la matrice 12 (notamment en provoquant une aspiration par les évents 17) car elle pourrait avoir pour effet négatif d'aspirer la feuille 3 très malléable à la température de thermoformage, alors que l'étoffe 2 pourrait, elle, ne pas subir aussi fortement cette aspiration et rester donc en retrait de la feuille 3, ce qui est absolument contraire à l'obtention d'un produit de qualité, puisqu'il pourrait en résulter des irrégularités de collage de l'étoffe et des poches très inesthétiques.

La membrane 15 doit être extrêmement souple, flexible et élastique afin qu'elle pousse le complexe 1 aussi parfaitement que possible dans la matrice 12 et qu'elle donne ainsi à l'article thermoformé les formes précises de la matrice 12, dans le moindre détail souhaité.

Après formage, la membrane 15 doit reprendre sa position première dans laquelle elle doit être plane et tendue au-dessus de la chambre 13.

En revanche, on peut souhaiter créer une ou plusieurs zones sans collage entre l'étoffe 2 et la feuille 3, notamment pour former des parties souples, soit comme éléments décoratifs, soit comme amortisseurs.

Il peut s'agir d'un semis de petits bulles ou de zones plus grandes et diversement localisées.

En raison de la perméabilité de la feuille 3, l'air qui est revenu dans la ou les zones non collée(s) après thermoformage, peut ressortir tout aussi facilement qu'il est rentré. Si l'on ne souhaite pas cette extrême mobilité de l'air, on peut injecter une matière dans la ou les zones non collées, par exemple un mousse synthétique (imprégnation, enduction, pression, etc.).

Lorsque le complexe 1 a été formé et qu'il s'est refroidi suffisamment pour fixer par durcissement les formes de la matrice, et lorsque simultanément la colle 4 a joué son rôle de fixation de l'étoffe 2 à la feuille 3, on interrompt l'arrivée d'air comprimé dans la chambre 13, ce que l'on a symbolisé par la flèche F3 (figure 7), de sorte que la membrane 15 revient à sa position première, tandis que le complexe garde la forme de la matrice 12.

Tout en retenant le complexe 1 dans son plan d'origine, on éloigne les parties 10 et 11 du moule, ce qui provoque la séparation du complexe 1 et de la matrice 12 (figure 8).

L'article qui vient d'être thermoformé tient encore par ses marges au reste (appelé «voile») du complexe 1 demeuré hors du moule. On transporte ce voile jusqu'à ce que l'article thermoformé soit en bonne position par rapport à un mécanisme de découpe représenté sur la figure 9 par deux cisailles 18.

L'article thermoformé et découpé est alors individualisé comme on le voit sur la figure 10, et prêt à être utilisé.

Il peut s'agir d'un présentoir, d'un contenant, d'un calage, d'une partie d'étui ou, bien entendu, de tout autre objet tel qu'un élément de carrosserie ou d'habitacle de véhicule, un élément de mobilier ou de décoration, etc.

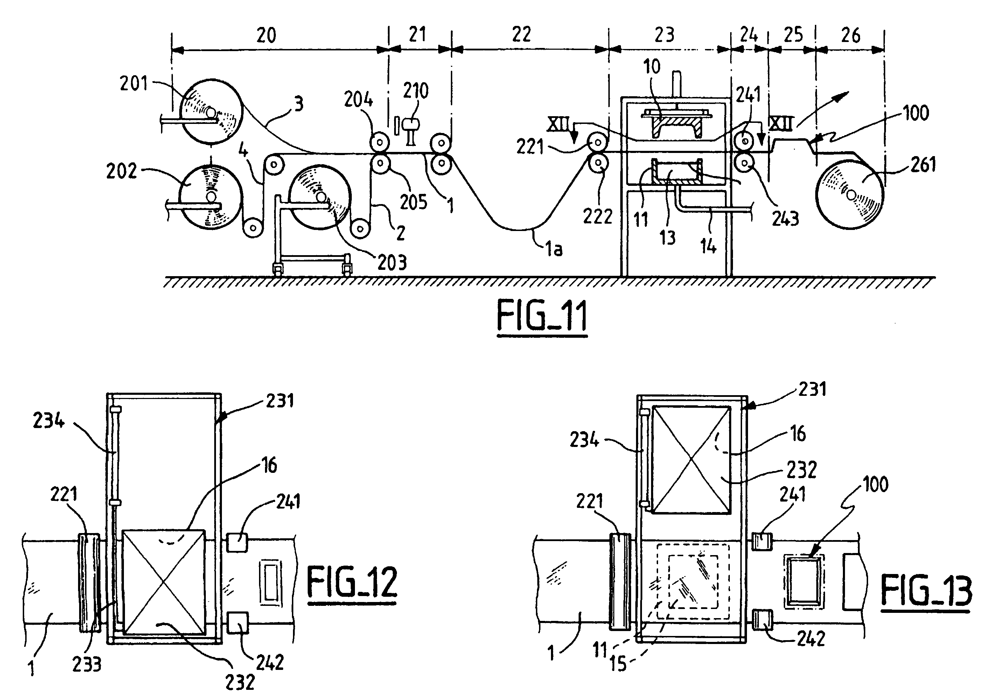

Sur les figures 11 à 13, on voit une machine permettant la mise en oeuvre de procédé conforme à l'invention qui comprend un poste d'approvisionnement 20, un poste d'assemblage 21, un poste d'accumulation 22, un poste de thermoformage 23, un poste de découpe 24, un poste d'évacuation 25 et un poste de récupération des déchets 26 (voile du complexe 1 après thermoformage).

Le poste d'approvisionnement 20 comprend trois bobines 201, 202 et 203 montées chacune rotative sur un support de tout type connu. La bobine 201 est celle de la feuille 3 qui doit constituer la face supérieure du complexe 1. La bobine 202 est celle de la colle 4, par exemple du type connu dans le commerce sous le nom de « hot melt ». La bobine 203 est celle de l'étoffe 2.

Ces trois composants sont dirigés à l'entrée de deux cylindres jumelés motorisés 204 et 205 pour le transport de l'ensemble et constituer le complexe 1.

Bien entendu, les rouleaux porteurs des bobines 201, 202 et 203 peuvent également être motorisés pour faciliter l'alimentation des composants 2, 3 et 4.

Le poste d'assemblage 21 comprend un élément de chauffage 210, radiant ou à soufflante, destiné à ramollir la feuille 3 et la colle 4 uniquement le long des lisières du complexe 1. En aval de l'élément de chauffage 210, se trouvent deux galets latéraux jumelés et motorisés 211 et 212 pour la traction du complexe 1 et pour exercer une pression sur les lisières chauffées, ce qui provoque le collage localisé de l'étoffe 2 et de la feuille 3, dans le but de fixer entre eux les trois composants 2, 3 et 4 selon deux zones latérales peu étendues, le complexe 1 ainsi formé pouvant alors être aisément déplacé et travaillé.

Les trois composants 2, 3 et 4 étant de natures très différentes, la traction du complexe 1 a des effets spécifiques selon les degrés d'extensibilité.

En pratique, on exerce l'essentiel de l'effort de transport sur la feuille 3 car la colle 4 et la nappe 2 suivent en fonction de leurs caractéristiques mécaniques. Pour éviter que ces conditions très particulières d'alimentation de la machine aient des conséquences négatives sur la qualité et la régularité des articles thermoformés, il s'avère utile d'assembler entre eux les différents composants mais il peut se présenter des cas où les composants ont des caractéristiques mécaniques plus proches les unes des autres, de sorte que le préassemblage peut devenir superflu.

Le poste 22 est dit d'accumulation car on y crée une boucle la de complexe 1 plus ou moins longue et qui autorise, par son allongement ou son raccourcissement automatique, une différence de vitesse de déplacement du complexe 1 entre les postes amont 20 et 21 et les postes aval 23 à 26.

Le poste 22 comprend deux rouleaux de traction 221 et 222 qui délivrent le complexe 1 au poste de thermoformage 23 dont les éléments essentiels ont déjà été décrits en regard des figures 3 à 9.

A la sortie du poste 23, le poste 24 comprend quatre galets de traction groupés en deux ensembles 241-243 et 242-244 (ce dernier n'est pas visible sur le dessin).

L'article 100 qui vient d'être créé dans le complexe 1 par thermoformage, constitue un relief qui se déplace sans difficulté du fait que les galets supérieurs 241 et 242 sont localisés sur les côtés de la bande du complexe 1, à l'aplomb des lisières collées au poste 21.

L'article 100 aboutit au poste 25 où il est découpé et évacué comme le symbolise la flèche F4. Après découpe et évacuation de l'article 100, le voile constitue un déchet qui aboutit au poste 26 et qui, ici, est enroulé sur une bobine 261.

L'Homme de Métier sait que ce déchet peut être récupéré, fragmenté, détruit ou recyclé si cela est possible, après séparation de l'étoffe 2 et de la feuille 3.

En se reportant aux figures 12 et 13, on voit que le poste de thermoformage 23 comprend un cadre 231 servant de support et de guide à l'élément de chauffage 16.

Celui-ci est assujetti à une monture 232 montée mobile par rapport au cadre 231 et est relié à l'extrémité d'une tige 233 d'un vérin 234.

La position de la figure 12 correspond à celle de la figure 3, c'est-à-dire que l'élément chauffant 16 a été poussé par la tige 233 du vérin 234 par la pression de fluide introduite dans le vérin 234 et se trouve au-dessus du complexe 1, les deux parties 10 et 11 du moule étant en position d'éloignement correspondant à l'ouverture du moule.

Quand le temps d'exposition est atteint, la température du complexe 1 est considérée comme correcte, le pression dans le vérin 234 est inversée, la tige 233 se rétracte dans le vérin 234 et ramène la monture 232 hors du poste de thermoformage 23, sur le côté de la machine.

Il ressort de la description ci-dessus que l'invention permet de donner des formes complexes à des nappes qui en soi ne sont pas de nature à conserver de telles formes.

La nappe 2 peut présenter toutes sortes de décors, notamment par impression, insertions, et autres. On peut adjoindre au complexe 1 une feuille de matériau élastique ou simplement déformable telle qu'une mousse en matière synthétique, soit en plus, soit à la place de la feuille 3.

## Revendications

1. Procédé pour l'obtention d'un article perméable non plat, selon lequel :
- on choisit une nappe textile (2), perméable par nature, préalablement constituée en un matériau non tissé, tissé, maillé ou bien en un complexe sur une base textile, et une feuille (3) en matière synthétique thermoformable, pour former respectivement une face extérieure textile et une face extérieure plastique de l'article ;
- on perfore ladite feuille (3) en matière synthétique pour la rendre perméable ;
- on dispose la nappe (2) et la feuille (3) l'une sur l'autre, en plaçant de la colle thermofusible entre elles de telle manière que la colle produise une couche perméable après fusion ;
- on immobile l'ensemble par sa périphérie en regard d'une matrice (12) ayant les formes voulues ;
- on chauffe la feuille (3) en matière synthétique pour la rendre malléable et pour activer la colle ;
- on exerce une poussée sur la nappe textile (2) au moyen d'un organe (15) devant épouser aussi exactement que possible les formes de la matrice (12), organe (15) avec lequel on exerce une pression sur l'article pour le former à chaud et par extension aux formes conjuguées de la matrice (12) et de l'organe (15) ;
- on évacue l'air situé entre la matrice (12) et l'organe (15) à travers la nappe textile (2) qui est perméable par nature et la feuille en matière synthétique (3) qui est rendue perméable par perforation, puis par des évents (17) de la matrice (12) ou de l'organe (15).

2. Procédé selon la revendication 1, **caractérisé en ce que** l'on assemble l'une des deux faces (2 ou 3) et la colle (4) par leurs marges ou lisières avant de les placer ensemble au-dessus de l'autre face (3 ou 2), puis le tout en regard de la matrice (12).

3. Procédé selon la revendication 1, **caractérisé en ce que** l'on utilise une feuille de colle thermofusible (4) traversée de passages (6).

4. Ensemble de plusieurs feuilles (2, 3, 4) superposées destiné à être thermoformé pour constituer des articles perméables non plats, comprenant une nappe textile (2), perméable par nature, préalablement constituée en un matériau non tissé, tissé, maillé ou bien en un complexe sur une base textile, une feuille (3) en matière synthétique thermoformable perforée, et une feuille perméable de colle thermofusible (4) disposée entre ladite nappe (2) et ladite feuille (3) en matière synthétique.

5. Ensemble de plusieurs feuilles (2, 3, 4) selon la revendication 4, **caractérisé en ce que** la colle n'est pas activée.

6. Ensemble de plusieurs feuilles (2, 3, 4) selon la revendication 4, **caractérisé en ce que** les feuilles (2, 3, 4) sont stockées en étant enroulées ensemble sur une même bobine mais non fixées les unes aux autres.

7. Ensemble de plusieurs feuilles (2, 3, 4) selon la revendication 4, **caractérisé en ce que** les trois feuilles (2, 3, 4) sont réunies selon au moins une étroite bande latérale ou « lisière ».

8. Ensemble de plusieurs feuilles (2, 3, 4) selon la revendication 4, **caractérisé en ce que** la nappe textile (2) est constituée d'une étoffe extensible dans les deux directions du plan.

9. Ensemble de plusieurs feuilles (2, 3, 4) selon la revendication 4, **caractérisé en ce que** la nappe textile (2) est constituée d'une étoffe à mailles.

10. Ensemble de plusieurs feuilles (2, 3, 4) selon la revendication 4, **caractérisé en ce que** la nappe textile (2) est constituée d'un matériau non perméable en lui-même et présentant alors des perforations.

11. Ensemble de plusieurs feuilles (2, 3, 4) selon la revendication 4, **caractérisé en ce que** la feuille de colle (4) placée entre les deux feuilles (2 et 3) est adhérée à l'une d'elles seulement, par activation localisée préalable.

12. Article perméable thermoformé non plat tel qu'obtenu par la mise en oeuvre du procédé selon les revendications 1 à 3, présentant une face extérieure textile (2) et une face extérieure plastique (3), formées respectivement d'une nappe textile (2) perméable par nature et d'une feuille (3) en un matériau synthétique perforée, réunies par une couche de colle (4) activée par chauffage, puis durcie par refroidissement tout en restant perméable.

13. Article perméable thermoformé non plat selon la revendication 12, **caractérisé en ce que** les deux feuilles (2, 3) sont réunies à la couche de colle selon toute leur surface.

14. Article perméable thermoformé non plat selon la revendication 12, **caractérisé en ce que** les deux faces (2, 3) épousent toutes deux exactement la même forme générale.

## Patentansprüche

1. Verfahren zur Herstellung eines permeablen, nicht flächigen Gegenstandes, demzufolge:
- man eine Textilbahn (2) wählt, die von Natur aus permeabel ist, und die vorher aus einem nicht gewebten, gewebten, maschigen Material oder aus einem anderen Stoff auf einer textilen Basis besteht, sowie einen Bogen (3) aus warmverformbarem, synthetischem Material, um jeweils eine textile Außenfläche und eine Kunststoffaußenfläche des Gegenstandes zu formen;
- man den genannten Bogen (3) aus synthetischem Material perforiert, um ihn permeabel zu machen;
- man die Bahn (2) und den Bogen (3) übereinander anordnet, indem man Schmelzkleber zwischen ihnen aufbringt, so dass der Kleber nach dem Schmelzen eine permeable Schicht erzeugt ;
- man das Ganze an seiner Peripherie in einer Matrize (12) immobilisiert, welche die gewünschten Formen besitzt ;
- man den Bogen (3) aus synthetischem Material erhitzt, um ihn verformbar zu machen und um den Kleber zu aktivieren ;
- man auf die Textilbahn (2) mittels eines Organs (15) Druck ausübt, das sich so genau wie möglich an die Formen der Matrize (12) anpasst, wobei mit dem Organ (15) Druck auf den Gegenstand ausgeübt wird, um ihn warm zu verformen, sowie durch Ausdehnen auf die einander zugeordneten Formen der Matrize (12) und des Organs (15) ;
- man die Luft entweichen lässt zwischen der Matrize (12) und dem Organ (15) über die Textilbahn (2), die von Natur aus permeabel ist, und dem Bogen (3) aus synthetischem Material, der durch Perforation permeabel gemacht wurde, und anschließend durch Lüftungslöcher (17) der Matrize (12) oder des Organs (15).

2. Verfahren nach Anspruch 1, **dadurch gekennzeichnet, dass** man eine der beiden Seiten (2 oder 3) zusammenfügt und sie an ihren Rändern verklebt (4), bevor man sie zusammen über die andere Seite (3 oder 2) legt, und anschließend das Ganze in eine Matrize (12) platziert.

3. Verfahren nach Anspruch 1, **dadurch gekennzeichnet, dass** man eine Schmelzklebefolie (4) verwendet, die von Durchlässen (6) durchzogen ist.

4. Einheit mit mehreren übereinanderliegenden Bahnen oder Bögen (2, 3, 4), die warmverformt werden sollen, um nicht flächige, permeable Gegenstände darzustellen, mit einer Textilbahn (2), die von Natur aus permeabel ist, und die vorher aus einem nicht gewebten, gewebten, maschigen Material oder aus einem Stoff auf einer textilen Basis besteht, sowie einem Bogen (3) aus warmverformbarem, synthetischem, perforierten Material, und einer permeablen Schmelzklebefolie (4), die zwischen der Textilbahn (2) und dem Bogen (3) aus synthetischem Material angeordnet ist.

5. Einheit mit mehreren Bahnen oder Bögen (2, 3, 4) nach Anspruch 4, **dadurch gekennzeichnet, dass** der Kleber nicht aktiviert ist.

6. Einheit mit mehreren Bahnen oder Bögen (2, 3, 4) nach Anspruch 4, **dadurch gekennzeichnet, dass** die Bahnen oder Bögen (2, 3, 4) gelagert werden, indem sie auf der gleichen Spule aufgerollt, aber nicht aneinander befestigt werden.

7. Einheit mit mehreren Bahnen oder Bögen (2, 3, 4) nach Anspruch 4, **dadurch gekennzeichnet, dass** die drei Bahnen oder Bögen (2, 3, 4) entlang mindestens einem schmalen Seitenband oder Rand zusammengefügt sind.

8. Einheit mit mehreren Bahnen oder Bögen (2, 3, 4) nach Anspruch 4, **dadurch gekennzeichnet, dass** die Textilbahn (2) aus einem Stoff besteht, der in die beiden Richtungen der Ebene ausgebreitet werden kann.

9. Einheit mit mehreren Bahnen oder Bögen (2, 3, 4) nach Anspruch 4, **dadurch gekennzeichnet, dass** die Textilbahn (2) aus einem Maschenstoff besteht.

10. Einheit mit mehreren Bahnen oder Bögen (2, 3, 4) nach Anspruch 4, **dadurch gekennzeichnet, dass** die Textilbahn (2) aus einem Material besteht, das selbst nicht permeabel ist, und in dem Fall Perforationen besitzt.

11. Einheit mit mehreren Bahnen oder Bögen (2, 3, 4) nach Anspruch 4, **dadurch gekennzeichnet, dass** die Klebefolie (4), die zwischen den beiden Bögen (2 und 3) platziert wird, durch vorherige, lokale Aktivierung nur an einem von ihnen anhaftet.

12. Nicht flächiger, warmverformter, permeabler Gegenstand, wie man ihn durch das Verfahren nach den Ansprüchen 1 bis 3 erhält, mit einer textilen Außenfläche (2) und einer Kunststoffaußenfläche (3), die jeweils durch eine von Natur aus permeable Textilbahn (2) sowie durch einen Bogen (3) aus einem perforierten, synthetischen Material gebildet und durch eine Klebeschicht (4) zusammengefügt werden, die durch Erwärmen aktiviert und anschließend durch Abkühlen gehärtet wird, wobei sie permeabel bleibt.

13. Nicht flächiger, warmverformter, permeabler Gegenstand nach Anspruch 12, **dadurch gekennzeichnet, dass** die beiden Bahnen oder Bögen (2, 3) an der Klebeschicht entlang ihrer ganzen Fläche zusammengefügt sind.

14. Nicht flächiger, warmverformter, permeabler Gegenstand nach Anspruch 12, **dadurch gekennzeichnet, dass** die beiden Seiten (2, 3) alle beide exakt die gleiche allgemeine Form nachahmen.

## Claims

1. Process for obtaining a non-flat permeable article, in which:
- a textile web (2), permeable by nature, formed beforehand from a nonwoven, woven or knitted structure, or else from a complex on a textile base, and a sheet (3) of thermoformable synthetic material are chosen in order to form a textile inner face and a plastic outer face of the article, respectively;
- the said sheet (3) of synthetic material is perforated in order to make it permeable;
- the web (2) and the sheet (3) are disposed one top of the other, placing hot-melt adhesive between them in such a way that the adhesive after melting produces a permeable layer;
- the assembly is immobilized via its periphery facing a die (12) having the desired shapes;
- the sheet (3) of synthetic material is heated in order to make it malleable and to active the adhesive;
- thrust is exerted on the textile web (2) by means of a member (15) that has to match as exactly as possible the shapes of the die (12), with which member (15) pressure is exerted on the article in order to hot-form it, and by extension to the conjugate shapes of the die (12) and of the member (15); and
- the air between the die (12) and the member (15) is evacuated through the textile web (2), which by nature is permeable, and the sheet of synthetic material (3) which is made permeable by perforation, and then via vents (17) in the die (12) or in the member (15).

2. Process according to Claim 1, **characterized in that** one of the two faces (2 or 3) and the adhesive (4) are brought together via their borders or selvedges before they are placed together on top of the other face (3 or 2), then the whole assembly facing the die (12).

3. Process according to Claim 1, **characterized in that** a sheet of hot-melt adhesive (4) penetrated by passages (6) is used.

4. Assembly comprising several superposed sheets (2, 3, 4) that is intended to be thermoformed in order to constitute non-flat permeable articles, comprising a textile web (2), permeable by nature, formed beforehand from a non-woven, woven or knitted material, or else from a complex on a textile base, a perforated sheet (3) of thermoformable synthetic material, and a permeable sheet of hot-melt adhesive (4) placed between the said web (2) and the said sheet (3) of synthetic material.

5. Assembly comprising several sheets (2, 3, 4) according to Claim 4, **characterized in that** the adhesive is not activated.

6. Assembly comprising several sheets (2, 3, 4) according to Claim 4, **characterized in that** the sheets (2, 3, 4) are stored, being wound together on the same reel, but are not fixed to one another.

7. Assembly comprising several sheets (2, 3, 4) according to Claim 4, **characterized in that** the three sheets, (2, 3, 4) are joined together along at least one narrow lateral band or "selvedge".

8. Assembly comprising several sheets (2, 3, 4) according to Claim 4, **characterized in that** the textile web (2) is formed from a fabric that can stretch in both directions of the plane.

9. Assembly comprising several sheets (2, 3, 4) according to Claim 4, **characterized in that** the textile web (2) is formed from a knitted fabric.

10. Assembly comprising several sheets (2, 3, 4) according to Claim 4, **characterized in that** the textile web (2) is formed from a material that is not in itself permeable but then has perforations.

11. Assembly comprising several sheets (2, 3, 4) according to Claim 4, **characterized in that** the sheet of adhesive (4) placed between the two sheets (2 and 3) is made to adhere to only one of them, by prior localized activation.

12. Non-flat thermoformed permeable article as obtained by implementing the process according to Claims 1 to 3, having a textile inner face (2) and a plastic outer face (3), which are formed respectively from a textile web (2), which is by nature permeable, and from a perforated sheet (3) of a synthetic material, joined together by a layer of adhesive (4) activated by heating, and then set by cooling, while remaining permeable.

13. Non-flat thermoformed permeable article according to Claim 12, **characterized in that** the two sheets (2, 3) are joined together to the layer of adhesive over their entire area.

14. Non-flat thermoformed permeable article according to Claim 12, **characterized in that** the two faces (2, 3) both exactly match the same overall shape.
